# EUROPÄISCHE PATENTSCHRIFT

(11) **EP 3 679 270 B1**
(45) Veröffentlichungstag und Bekanntmachung des Hinweises auf die Patenterteilung: **30.11.2022**
(21) Anmeldenummer: 18730998.4
(22) Anmeldetag: 04.06.2018
(51) Int. Cl.: F16G 1/28, F16G 5/20

(54) **ANTRIEBSRIEMEN MIT EINER PROFILIERTEN RIEMENRÜCKSEITE**
DRIVE BELT HAVING A PROFILED BELT REAR SIDE
COURROIE D'ENTRAÎNEMENT PRÉSENTANT UN CÔTÉ ARRIÈRE PROFILÉ

(30) Priorität: 06.09.2017 DE 102017215654
(43) Veröffentlichungstag der Anmeldung: 15.07.2020
(73) Patentinhaber: ContiTech Antriebssysteme GmbH, 30165 Hannover (DE)
(72) Erfinder: UNRUH, Axel, 30419 Hannover (DE)
(74) Vertreter: Continental Corporation
(86) Internationale Anmeldenummer: PCT/EP2018/064545
(87) Internationale Veröffentlichungsnummer: WO 2019/048090

(56) Entgegenhaltungen:
- WO-A1-83/01056
- DE-A1- 2 061 401
- GB-A- 2 124 729
- US-A1- 2015 148 163

## Beschreibung

Die Erfindung betrifft einen Antriebsriemen mit einer zum Antrieb von Nebenaggregaten vorgesehenen Riemenrückseite, insbesondere Keilrippenriemen, wobei die Riemenrückseite profiliert ist, vorzugsweise mit einem geprägten Profil versehen ist. Weiterhin betrifft die Erfindung ein Formverfahren zur Herstellung eines solchen Antriebsriemens mit Rückenprofil.

Riementriebe finden sich heute bei einer Vielzahl von Antriebskonstellationen und stellen eine einfache und effektive Möglichkeit der Kraftübertragung dar. Insbesondere bei Kraftfahrzeugmotoren sind Riementriebe seit langem bekannt und werden beispielsweise zum Antrieb von Steuerungen, Nockenwellen und Wasserpumpen eingesetzt. Hier werden häufig Keilrippenriemen genutzt (poly-V-belt type), die auf ihrer Profilseite, d.h. ihrer Rippenseite, besonders hohe Drehmomente durch hoher Reibwerte bei der Umschlingungsreibung übertragen können.

Riementriebe müssen aber heute zunehmend in der Lage sein, auch mit ihrer Rückseite weitere Aggregate anzutreiben. So ist der Antrieb einer Wasserpumpe in einem Kraftfahrzeugmotor ein typisches Beispiel für einen Antrieb über die Riemenrückseite.

Wichtig dabei ist es, dass nicht nur die Riemenvorderseite, also die Profilseite, einen ausreichend hohen Reibwert zur Übertragung hoher Drehmomente besitzt, sondern dass dies auch bei der Riemenrückseite und der rückseitigen Biegung und Umschlingung einer Rückenrolle der Fall ist.

Die EP 1 787 045 B1 offenbart einen Riementrieb mit einem als Keilrippenriemen ausgebildeten Antriebsriemen, dessen Rückseite geprägt ist, um eine höhere Reibung zu erreichen. Zusätzlich ist die zugehörige Rückenrolle bzw. das Reibrad mit mehr oder weniger umlaufenden Nuten versehen, um einen Wasserablauf zu ermöglichen.

Die Prägung der Riemenrückseite soll als ein hier ein nicht näher bestimmtes Relief ausgebildet sein oder - ebenfalls nicht näher beschriebene - Nuten auf dem Riemenrücken ausbilden, deren Größenordnung bzw. Tiefe etwa im Bereich von 1 mm liegt. Diese Prägung kann entweder durch abtragende Bearbeitung hergestellt werden, was aufwendig und umweltbelastend ist, oder durch eine Prägung während der Vulkanisation. Die Prägung während der Vulkanisation wird dabei mit einem Innenwerkzeug durchgeführt, welches auf seiner Außenseite mit einer Gewebebeschichtung versehen ist. Diese Gewebebeschichtung wird dann in den Vulkanisationsrohling eingedrückt und erscheint später, d.h. nach Vulkanisation, Vereinzelung und Umkrempeln auf dem Riemenrücken.

Als Nachteil erscheint hierbei, dass nicht nur die abtragende Bearbeitung, sondern auch die Prägung während der Vulkanisation durch ein besonderes Werkzeug durchgeführt werden müssen. Darüber hinaus entsteht durch eine Gewebebeschichtung als Negativ ein eher zufälliges Muster einer Prägung, welches im Hinblick auf seinen Reibwert sicher noch nicht optimiert ist.

Als Keilrippenriemen ausgebildete Antriebsriemen werden üblicherweise als Ringe von einem zylindrischen bzw. schlauchförmigen Keilrippenrohling abgeschnitten, dessen Länge einem Vielfachen der Riemenbreite entspricht. Nachdem die einzelnen Ringe vom Keilrippenrohling abgeschnitten sind, werden die Ringe "umgekrempelt" so dass ihre "gerippt" profilierte Seite auf der Innenseite liegt. Man erhält so den landläufig als Keilrippenriemen oder Vielkeilriemen bezeichneten Antriebsriemen, der mit seiner profilierten Innenseite komplementär gestaltete Riemenscheiben antreibt und auf dessen Rückseite gegebenenfalls Spannrollen oder weitere Antriebe kraftschlüssig angeschlossen werden

Man unterscheidet bei der Herstellung des Keilrippenrohlings im Wesentlichen wiederum zwei Verfahren, nämlich das abtragende Schleifverfahren und das nicht abtragende Formverfahren.

Beim Schleifverfahren wird ein Keilrippenrohling mit glatter Oberfläche nach der vollständigen Vulkanisation und vor dem Abschneiden der Ringe einer materialabtragenden Bearbeitung (Schleifen) unterzogen, wodurch auf seiner Außenseite, nämlich in den so genannten Unterbau, das Rippenprofil eingebracht/eingeschliffen wird.

Beim Formverfahren wird das Rippenprofil des Keilrippenrohlings bereits während der Vulkanisation erzeugt, nämlich durch eine zylindrische Vulkanisationsform, in welches der Keilrippenrohling vor bzw. während der Vulkanisation eingepresst wird und die auf ihrer Innenseite das Negativ des Rippenprofils aufweist.

Beim Formverfahren zur Herstellung von Keilrippenriemen erfolgt , wie z.B. aus der US 2015/148163 A1 bekannt, üblicherweise der Aufbau des Keilrippenrohlings zunächst auf einer so genannten Riemenaufbautrommel.

Mit Blick auf das weitere Fertigungsverfahren und das "Umkrempeln" nach dem Schneiden/Vereinzeln muss auf dieser Trommel natürlich zuerst die Rückseite des Riemens aufgebaut werden, nämlich die so genannte Decklage. Letztere kann ein- oder zweischichtig aufgebaut sein und mit verschiedenen Zuschlagstoffen oder Beschichtungen versehen sein.

Auf diese Decklage wird dann der so genannte "Zugstrang" aus einem oder mehreren Festigkeitsträgern aufgebracht. Die Festigkeitsträger bestehen üblicherweise aus einem oder mehreren umeinander geschlagenen oder gedrehten Fasern, Fäden oder Corden und werden über die gesamte Breite der Riemen-Aufbautrommel in mehr oder weniger engen Windungen ein oder mehrlagig aufgespult. Im fertigen Riemen sind die Festigkeitsträger für die Zugkraftübertragung maßgeblich und befinden sich dann in den Bereichen zwischen Decklage und dem Unterbau, der nachfolgend beschrieben ist.

Der so genannte "Unterbau" oder Grundkörper des Keilrippenriemens, d.h. der Bereich, der später das Rippenprofil und gegebenenfalls noch eine geringe weitere Schichtdicke aufweist, wird auf den Zugstrang aufgetragen. Der Auftrag des Unterbaus erfolgt dabei in Form einer dünnen Platte aus elastomeren Material/Gummi, deren Breite der Länge der Riemen-Aufbautrommel und deren Länge in etwa dem Umfang der Riemen-Aufbautrommel entspricht. Die Enden dieser Platte können in dem noch klebrigen Zustand leicht zusammengefügt werden.

Als letztes wird ggf. noch eine Gewebelage aufgetragen, die für den fertigen Keilrippenriemen besonderer Eigenschaften im Profilbereich bereitstellt, beispielsweise zur Geräusch- oder Reibungsminderung beiträgt. Die Gewebelage komplettiert so den Keilrippenrohling.

Der so entstandene unvulkanisierte Keilrippenrohling, also der Verbund aus Decklage, Zugstrang und Unterbau und ggf. Gewebelage wird dann in die im Durchmesser etwas größere zylindrische Vulkanisationsform so eingebracht, dass der Unterbau bzw. die Gewebelage der mit einem Negativ des Rippenprofils versehenen Innenseite der Vulkanisationsform zugewandt ist.

In den inneren Hohlraum der Vulkanisationsform und des Keilrippenrohlings werden sodann eine aus Gummi bestehende Manschette/Heizmanschette und entsprechende Einrichtungen zur Dehnung der Manschette und zu ihrer Erwärmung eingeführt, üblicherweise Zuführungen und Einrichtungen zur Beaufschlagung der Manschette mit Druckluft und zur Beaufschlagung der üblicherweise doppelwandigen Vulkanisationsform mit heißem Dampf.

Die Manschette wird dann mit dem heißen Dampf ausgedehnt, legt sich an die Decklage an und presst den gesamten Keilrippenrohling in das umgebende Negativ der Vulkanisationsform, wodurch die äußeren Schichten des Keilrippenrohlings, nämlich der Unterbau, in das Negativ gedrückt und somit mit einem "geformten" Rippenprofil versehen wird.

Es wurde bereits oben erwähnt, dass die Rückseite eines solchen Vielkeilriemens ebenfalls zum Antrieb von Riemenscheiben genutzt wird, beispielsweise für den Antrieb einer Wasserpumpe eines Kraftfahrzeugmotors. Demzufolge werden an die Ausbildung der Riemenrückseite und an den dort erreichbaren Reibungskoeffizienten auch höhere Anforderungen gestellt.

Betrachtet man nun weiter die Herstellung eines Keilrippenriemens im Formverfahren, so wird deutlich dass die Oberfläche und die Ausbildung des Riemenrückens durch die Außenoberfläche der im Hohlraum der Vulkanisationsform eingesetzten Manschette bestimmt werden kann, wenn keine weiteren abtragenden Bearbeitungen vorgesehen sind. In diesem Fall formt bzw. prägt allein diese Manschette, die den Keilrippenrohling mit seiner Außenseite in das umgebende Negativ der Vulkanisationsform presst, über Ihre Außenoberfläche die Innenoberfläche des Keilrippenrohlings und damit die Riemenrückseite der nach dem später folgenden Schneiden und Umkrempeln vereinzelten Riemen.

Die Manschette als solche wird üblicherweise auf einen Dorn hergestellt, dort vulkanisiert, dann ihrerseits ebenfalls umgekrempelt und als Heizmanschette in dem oben genannten Herstellprozess für den Keilrippenrohling verwandt. Nachdem Krempelvorgang bildet also die innere und auf dem Dorn vulkanisierte Oberfläche der Manschette ihre Außenseite.

Die EP 0 232 575 B1 offenbart eine Lösung zur Bereitstellung eines hohen Reibwerts sowohl auf der Riemenvorderseite als auch auf der Riemenrückseite, bei welcher ein auf beiden Seiten mit einem Rippenprofil versehenen Antriebsriemen vorgeschlagen wird. Die Rippen auf der Rückseite weisen dabei Quernuten auf, die die Rückwärtsbiegung um eine Rückenrolle ermöglichen und in solchen Grenzen halten soll, dass ein sicherer Betrieb ermöglicht und trotzdem ein sehr hoher Reibwert für den Rückenantrieb erreicht wird. Eine solche Ausbildung erfordert jedoch eine relativ komplizierte Herstellung und erhöht den Materialverbrauch und das Gewicht des Riemens.

Da also der Riemenrücken zunehmend eine Antriebsfunktion übernimmt, ist der Reibungsbeiwert (CoF = Coefficient of Friction, gemessen etwa nach SAE J2432) entscheidend. Die Kraft- und Momentenübertragung des Riemenrückens ist durch die Umschlingung und die Anpresskraft am Abtriebsrad, d.h. in diesem Fall an der Rückenrolle bestimmt. Der Reibungsbeiwert ist zudem über die Materialpaarung von Rollen und Riemen gekennzeichnet. Heutzutage ist es zur Energieeinsparung bzw. CO2-Einsparung üblich, dass die Vorspannkraft im Trieb abgesenkt wird. Eine Kraftübertragung über den Riemenrücken ist somit nicht mehr so sehr durch die Anpresskraft/Normalkraft, sondern vielmehr nur noch durch den Reibungsbeiwert beeinflussbar.

Für die Erfindung bestand also die Aufgabe, einen Antriebsriemen bereitzustellen der in üblicher Konstruktion und in leichter Bauweise die Möglichkeit bietet, über Rückenrollen weitere Aggregate sicher anzutreiben, der von Anfang an hoher Reibwerte realisieren lässt und demzufolge über seine gesamte Lebensdauer hohe Antriebsmomente übertragen kann.

Gelöst wird diese Aufgabe durch ein besonders geeignetes Formverfahren zur Herstellung von Antriebsriemen, insbesondere Keilrippenriemen, gemäß dem unabhängigen Verfahrensanspruch.

Weitere vorteilhafte Ausbildungen sind in den jeweiligen Unteransprüchen offenbart. Dabei ist der Antriebsriemen auf seiner rückseitigen Oberfläche mit einem Profil versehen, das eine Vielzahl pyramidenstumpf-förmiger Vorsprüngen beinhaltet, deren Höhe h weniger als 1 mm beträgt, vorzugsweise in makroskopischen Größenordnungen mit h ≤ 0,2 mm ausgebildet ist, wobei die Grundflächen A_{G} der pyramidenstumpf-förmigen Vorsprünge eine Fläche von ≤ 1,0 mm² und die Dachflächen A_{D} eine Fläche von ≤ 0,8 mm² aufweisen.

Durch eine solche Ausbildung der rückseitigen Oberfläche eines Antriebsriemens erreicht man eine unerwartete Verbesserung des Reibungskoeffizienten CoF beim Antrieb über die Riemenrückseite, d.h. eine deutlich verbesserte Momenten-und Kraftübertragung während der Umschlingung von Rückenrollen. Die Vorspannkraft kann also abgesenkt werden, ohne die Antriebsleistung zu verringern.

Dies geht einher mit einem weiteren außerordentlich vorteilhaften Effekt, der darin besteht das der Reibungskoeffizient in Bezug auf die Verbindung zwischen Riemenrückseite und Rückenrolle bereits von Anfang an, das heißt vom Aufziehen bzw. Auflegen des neuen Riemens an, sehr hoch ist und dazu über die gesamte Lebensdauer des Riemens gleich bleibt. Dies führt vorteilhafterweise dazu, dass die bisher üblichen "Einlaufeffekte" nicht auftreten und von vornherein mit einer gleich bleibenden Leistungsübertragung beim Antrieb einer Rückenrolle gerechnet und geplant werden kann.

Eine vorteilhafte Weiterbildung besteht darin, dass die pyramidenstumpf-förmigen Vorsprünge als gerade, vierseitige Pyramidenstümpfe mit im Wesentlichen parallel angeordneten Grundflächen und Dachflächen ausgebildet sind. Dies erzielt die bereits oben genannten positiven Wirkungen und vereinfacht zudem die Herstellung. Natürlich kann auch jede andere Form von Pyramidenstumpf als Profil auf den Riemenrücken aufgebracht werden, jedoch ist es für das Ausbilden eines erhöhten Reibungskoeffizienten wichtig, dass Grundflächen und Dachflächen im Wesentlichen parallel ausgebildet sind.

Eine weitere vorteilhafte Ausbildung besteht darin, dass die pyramidenstumpf-förmigen Vorsprünge auf der Riemenrückseite unter Berücksichtigung üblicher Fertigungstoleranzen eine Höhe von 0,15 mm aufweisen. Diese Maßgabe, insbesondere im Zusammenwirken mit einer weiteren vorteilhafte Ausbildung, die darin besteht, dass die pyramidenstumpf-förmigen Vorsprünge unter Berücksichtigung üblicher Fertigungstoleranzen eine Grundfläche A_{G} von 0,8 mm × 0,8 mm und eine Dachfläche A_{D} von 0,6 mm × 0,6 mm aufweisen, führen dazu, dass eine Verbesserung des Reibungskoeffizienten im Vergleich zu Profilierungen aus dem Stand der Technik oder zu nicht profilierten Riemenrücken von bis zu 25 % erreicht wird.

Zur Herstellung eines solchen Antriebsriemens mit einer zum Antrieb von Nebenaggregaten vorgesehenen Riemenrückseite ist ein Formverfahren besonders geeignet, bei dem die Profilierung der Riemenrückseite bereits während der Vulkanisation des Riemens hergestellt wird. Bei einem solchen Herstellungsverfahren wird zunächst ein Antriebsriemenrohling als Verbund aus Decklage, Zugstrang und Unterbau und ggf. Gewebelage auf einer Riemenaufbautrommel hergestellt und danach in eine im Durchmesser etwas größere zylindrische Vulkanisationsform so eingebracht, dass der Unterbau der mit einem Negativ des antriebsseitigen Profils versehenen Innenseite der Vulkanisationsform zugewandt ist, wie oben bereits beschrieben.

Sodann wird in den inneren Hohlraum der Vulkanisationsform und des noch nicht vulkanisierten Antriebsriemenrohlings eine aus Gummi bestehende Manschette/Heizmanschette eingeführt und unter Zufuhr von Druckluft und/oder Heizmedium so ausgedehnt, dass sie sich an den Antriebsriemenrohling innen anlegt und letzteren in das umgebende Negativ der Vulkanisationsform presst, wodurch die äußere Schicht des Antriebsriemenrohlings, nämlich der Unterbau in das Negativ gedrückt und somit seinem Profil versehen wird.

Die Außenoberfläche der Manschette bildet aber dann das prägende Negativ für die Oberfläche des Riemenrückens bzw. der späteren Riemenrückseite. Demzufolge muss bereits bei der Herstellung der Manschette deren Außenoberfläche so gestaltet werden, dass die Riemenrückseite während der Vulkanisation die Profilierung erhält, welche den Riemen zum Antrieb auch rückseitig umlaufener bzw. umschlungener Antriebsrollen befähigt.

Die besondere erfinderische Ausbildung des insoweit bekannten Verfahrens besteht nun darin, dass die Manschette zuvor auf einem vorzugsweise metallischen Dorn hergestellt wird, dessen Außenseite das Profil der rückseitigen Oberfläche des Antriebsriemens in Form einer Vielzahl pyramidenstumpf-förmiger Vorsprünge aufweist. Dabei wird das Material zur Herstellung der Manschette, in aller Regel ein Elastomer, vorzugsweise Gummi, in mehreren überlappenden Lagen auf den Dorn gewickelt und anschließend untere Außendruck auf dem Dorn vulkanisiert, wodurch die schlauchförmige Manschette entsteht. die auf ihrer Innenseite das Rückseitenprofil des Riemenrückens erhält.

Nach Abschluss der Vulkanisation wird die Manschette schließlich vom Dorn abgenommen, dann umgekrempelt und in oben genannter Art in den inneren Hohlraum der Vulkanisationsform und des noch nicht vulkanisierten Antriebsriemenrohlings eingesetzt wird.

Das Profil der Außenoberfläche des Dorns entspricht also in seinen geometrischen Ausbildungen und Abmessungen dem auf der Riemenrückseite letztlich vorhandenen Profil, beinhaltet nämlich eine Vielzahl pyramidenstumpf-förmiger Vorsprüngen, deren Höhe h weniger als 1 mm beträgt, vorzugsweise in makroskopischen Größenordnungen mit h ≤ 0,2 mm ausgebildet ist, wobei die Grundflächen A_{G} der pyramidenstumpf-förmigen Vorsprünge eine Fläche von ≤ 1,0 mm² und die Dachflächen A_{D} eine Fläche von ≤ 0,8 mm² aufweisen.

Bei einem solche Verfahren zur Riemenherstellung durch Formverfahren ist also kein zusätzliches Innenwerkzeug erforderlich, sondern es wird die sowieso erforderliche Manschette zum Anpressen des Antriebsriemenrohlings in das umgebende Negativ der Vulkanisationsform genutzt, um im selben Arbeitsgang auch das Riemenrückenprofil des Antriebsriemenrohlings einzuformen.

Besonders einfach und damit vorteilhaft lässt sich ein solches Profil dadurch herstellen, dass die Dornoberfläche zunächst gerändelt und dann geschliffen wird. Dies sind übliche und gut beherrschbare Verarbeitungsverfahren für metallische Oberflächen. Durch die Veränderung entstehen zunächst Pyramiden bzw. relativ spitze Pyramidenkörper / Pyramidenstümpfe, welche danach durch das Schleifverfahren auf die gewünschten Maße gebracht werden.

Anhand eines Ausführungsbeispieles soll die Erfindung näher erläutert werden. Es zeigen
- Fig. 1: einen vergrößerten Ausschnitt aus dem Rückenprofil eines erfindungsgemäßen Antriebsriemens,
- Fig. 2: einen vergrößerte zeichnerische Darstellung eines Ausschnitts aus dem Rückenprofil nach Fig.1,
- Fig. 3: ein Foto eines realen, vergrößerte Oberflächenauschnitts der erfindungsgemäßen Riemenrückseite,
- Fig. 4: Ein Diagramm zum Vergleich der Reibungsbeiwerte CoF von herkömmlichen Riemenrücken mit erfindungsgemäßen Riemenrücken.

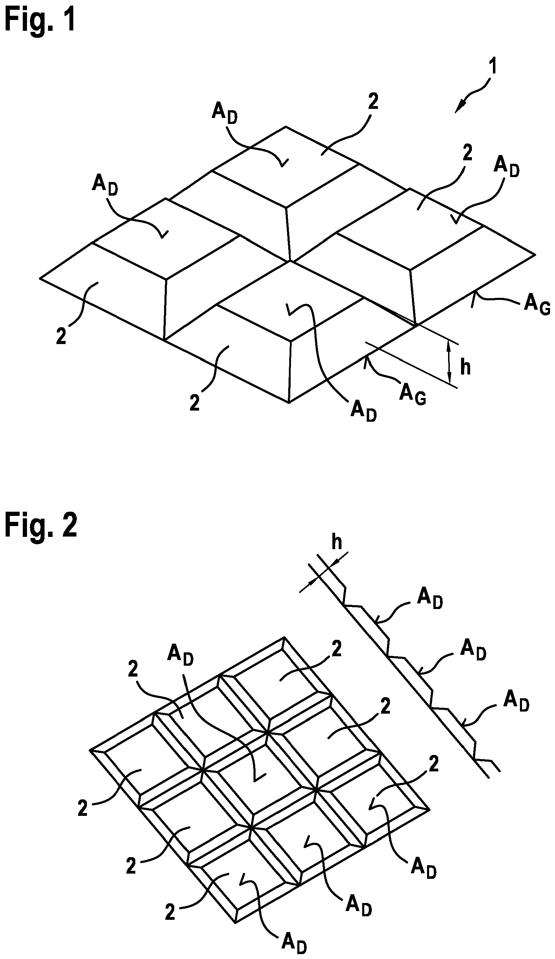

Die Fig. 1 zeigt einen vergrößerten Ausschnitt aus dem Profil 1 des Riemenrückens eines erfindungsgemäßen Antriebsriemens.

In der Zusammenschau mit der Fig. 2, die einer Fertigungszeichnung der Rückenfläche mit Aufsicht und Schnitt entspricht, erkennt man, dass das Profil der rückseitigen Oberfläche des erfindungsgemäßen Antriebsriemens eine Vielzahl pyramidenstumpf-förmiger Vorsprünge 2 mit einer Höhe h von 0,15 mm aufweist. Es handelt sich hier um gerade, vierseitige Pyramidenstümpfe mit im Wesentlichen parallel angeordneten Grundflächen A_{G} und Dachflächen A_{D}.

Die Höhe h von 0,15 mm ist mit bloßem Auge noch erkennbar, so dass hier eine makroskopische Größenordnung betroffen ist. Auch wenn der Begriff "makroskopisch" an sich natürlich relativ ist, gelten in vielen technischen Bereichen mit diesem Begriff solche Größenordnungen als umfasst (klein, aber noch mit bloßem Auge sichtbarer Bereich).

Die Grundflächen A_{G} der jeweiligen pyramidenstumpf-förmigen Vorsprünge weisen hier eine Fläche von 0,8 mm × 0,8 mm auf, also etwa 0,64 mm², während die Dachflächen A_{D} eine Fläche von 0,6 mm × 0,6 mm aufweisen, also etwa 0,36 mm² aufweisen.

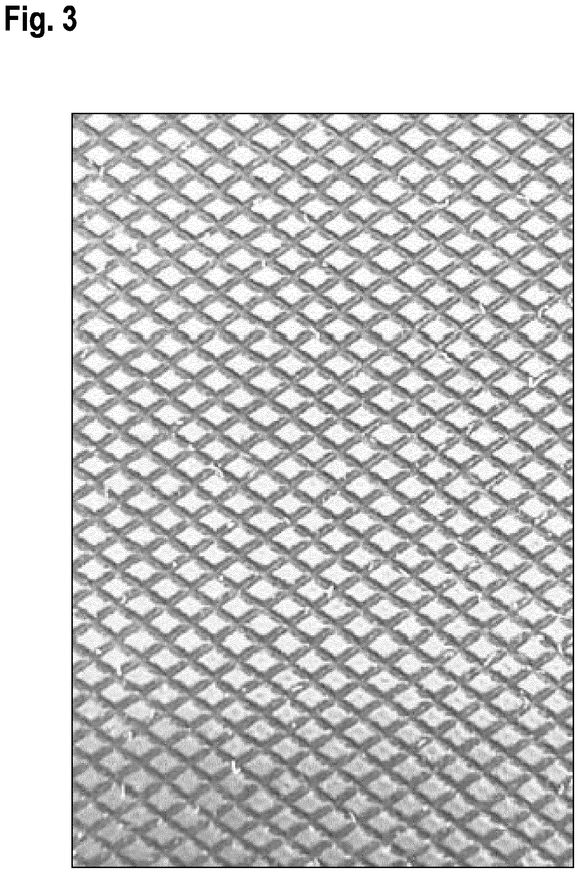

Fig. 3 zeigt ein Foto, welches das reale, allerdings ca. 3,5-fachvergrößerte Erscheinungsbild eines Oberflächenauschnitts der Rückseite eines erfindungsgemäßen Riemens darstellt. Auch hier erkennt man das Profil der rückseitigen Oberfläche des erfindungsgemäßen Antriebsriemens als eine Vielzahl pyramidenstumpf-förmiger Vorsprünge.

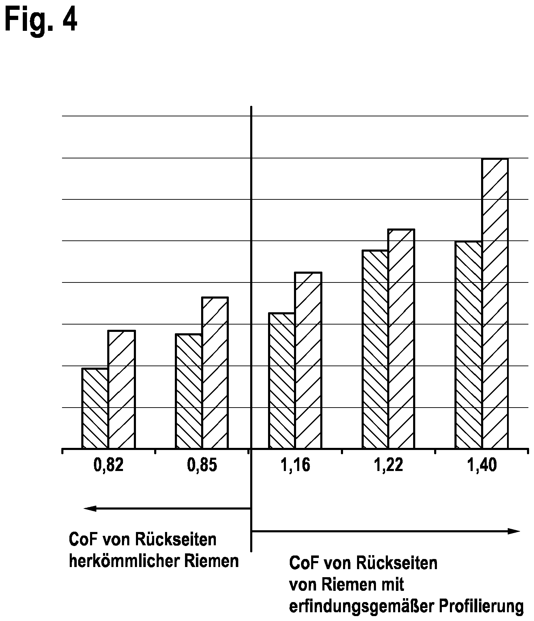

Fig. 4 zeigt ein Diagramm, welches den Vergleich der Reibungsbeiwerte CoF nach SAE J2432 von herkömmlichen Riemenrücken mit denen der erfindungsgemäßen Profilierung zeigt, gemessen direkt nach Auflegen eines neuen Riemens. Es wurden jeweils die Mittelwerte aus 20 gemessenen Riemen eines Typs ausgewertet und eingetragen. Man erkennt hier deutlich, dass die auf der linken Seite dargestellten Reibungsbeiwerte von Rückseiten herkömmlicher Riemen aus dem Stand der Technik erheblich unter denen der Riemen mit der erfindungsgemäßen Profilierung liegen.

### Bezugszeichenliste

### (Teil der Beschreibung)

- 1: Ausschnitt aus dem Profil eines Riemenrückens
- 2: pyramidenstumpf-förmiger Vorsprung
- A_{G}: Grundfläche
- A_{D}: Dachfläche
- h: Höhe des pyramidenstumpf-förmigen Vorsprungs

## Patentansprüche

1. Verfahren zum Herstellen eines Antriebsriemens mit einer zum Antrieb von Nebenaggregaten profilierten Riemenrückseite in einem Formverfahren, wobei die Riemenrückseite mit einem geprägten Profil (1) versehen ist und eine Vielzahl pyramidenstumpf-förmiger Vorsprünge (2) aufweist, deren Höhe h weniger als 1 mm beträgt, vorzugsweise in makroskopischen Größenordnungen mit h ≤ 0,2 mm ausgebildet ist, wobei die Grundflächen A_{G} der pyramidenstumpf-förmigen Vorsprünge eine Fläche von ≤ 1,0 mm² und die Dachflächen A_{D} eine Fläche von ≤ 0,8 mm² aufweisen, wobei zunächst ein Antriebsriemenrohling als Verbund aus Decklage, Zugstrang und Unterbau und ggf. Gewebelage auf einer Riemenaufbautrommel hergestellt wird, danach in eine im Durchmesser etwas größere zylindrische Vulkanisationsform so eingebracht, dass der Unterbau der mit einem Negativ des antriebsseitigen Profils versehenen Innenseite der Vulkanisationsform zugewandt ist, wobei danach in den inneren Hohlraum der Vulkanisationsform und des noch nicht vulkanisierten Antriebsriemenrohlings eine aus Gummi bestehende Manschette/Heizmanschette eingeführt wird und unter Zufuhr von Druckluft und/oder Heizmedium so ausgedehnt wird, dass sie sich an Antriebsriemenrohling innen anlegt und letzteren in das umgebende Negativ der Vulkanisationsform presst, wodurch die äußere Schicht des Antriebsriemenrohlings, nämlich der Unterbau bzw. die Gewebelage, in das Negativ gedrückt und somit seinem Profil versehen wird, **dadurch gekennzeichnet, dass** die Manschette zuvor auf einem vorzugsweise metallischen Dorn hergestellt wird, dessen Außenseite das Profil der rückseitigen Oberfläche des Antriebsriemens in Form einer Vielzahl pyramidenstumpf-förmiger Vorsprünge aufweist, wobei das Material zur Herstellung der Manschette in vorzugsweise mehreren Lagen eines Elastomers auf den Dorn gewickelt und anschließend untere Außendruck auf dem Dorn vulkanisiert wird, wodurch die Manschette auf ihrer Innenseite das Rückseitenprofil des Riemenrückens erhält, und dass nach Abschluss der Vulkanisation der Manschette letztere schließlich vom Dorn abgenommen, dann umgekrempelt wird und in oben genannter Art in den inneren Hohlraum der Vulkanisationsform und des noch nicht vulkanisierten Antriebsriemenrohlings eingesetzt wird.

2. Verfahren nach Anspruch 1 , bei dem der Dorn zur Herstellung des auf seiner Außenseite befindlichen Profils in Form einer Vielzahl pyramidenstumpf-förmiger Vorsprünge zunächst gerändelt und dann geschliffen wird.

3. Verfahren nach Anspruch 1 oder 2, bei dem die pyramidenstumpf-förmigen Vorsprünge auf der Dornoberfläche eine Höhe h ≤ 0,2 mm, eine Grundfläche A_{G} von 0,8 mm x 0,8 mm und eine Dachfläche A_{D} von 0,6 mm × 0,6 mm aufweisen.

4. Verfahren nach einem der Ansprüche 1 bis 3, beim dem die pyramidenstumpf-förmigen Vorsprünge (2) als gerade, vierseitige Pyramidenstümpfe mit parallel angeordneten Grundflächen A_{G} und Dachflächen A_{D} ausgebildet sind.

## Claims

1. Method for producing by a moulding method a drive belt which has a profiled belt rear side for driving ancillary equipment, wherein the belt rear side is provided with an embossed profile (1) and has a multiplicity of frustum-shaped projections (2) of which the height h is less than 1 mm, preferably is configured in macroscopic magnitudes where h ≤ 0.2 mm, wherein the base areas A_{G} of the frustum-shaped projections have an area of ≤ 1.0 mm² and the roof areas A_{D} have an area of ≤ 0.8 mm², wherein firstly a drive belt blank as a composite of a cover ply, a cord and a substructure and optionally a woven-fabric ply is produced on a belt building drum, thereafter is incorporated into a cylindrical vulcanization mould of a slightly larger diameter such that the substructure faces the internal side of the vulcanization mould that is provided with a negative of the profile on the drive side, wherein thereafter a sleeve/heating sleeve composed of rubber is introduced into the inner cavity of the vulcanization mould and of the not yet vulcanized drive belt blank and said sleeve/heating sleeve is expanded by a supply of compressed air and/or a heating medium such that said sleeve/heating sleeve comes to bear on the inside of the drive belt blank and presses the latter into the surrounding negative of the vulcanization mould, as a result of which the outer layer of the drive belt blank, specifically the substructure or the woven-fabric ply, respectively, is pressed into the negative and in this way provided with the profile thereof, **characterized in that**, prior thereto, the sleeve is produced on a preferably metallic mandrel of which the external side has the profile of the rear-side surface of the drive belt in the form of a multiplicity of frustum-shaped projections, wherein the material for the production of the sleeve is preferably wound in a plurality of plies of an elastomer onto the mandrel and subsequently vulcanized on the mandrel by external pressure, as a result of which the sleeve on the internal side thereof is imparted the rear-side profile of the belt backing, and **in that** upon completion of the vulcanization of the sleeve the latter is finally removed from the mandrel, then inverted and in the manner described above inserted into the inner cavity of the vulcanization mould and of the not yet vulcanized drive belt blank.

2. Method according to Claim 1, in which method the mandrel for producing the profile in the form of a multiplicity of frustum-shaped projections situated on the external side thereof is first knurled and then ground.

3. Method according to Claim 1 or 2, in which method the frustum-shaped projections on the mandrel surface have a height h ≤ 0.2 mm, a base area A_{G} of 0.8 mm × 0.8 mm, and a roof area A_{D} of 0.6 mm × 0.6 mm.

4. Method according to one of Claims 1 to 3, in which method the frustum-shaped projections (2) are configured as straight, quadrilateral frustums having base areas A_{G} and roof areas A_{D} disposed in parallel.

## Revendications

1. Procédé de fabrication d'une courroie d'entraînement dotée d'un côté arrière de courroie profilé pour l'entraînement d'accessoires dans un procédé de moulage, le côté arrière de courroie étant muni d'un profil en relief (1) et présentant une pluralité de saillies (2) en forme de pyramides tronquées, dont la hauteur h est inférieure à 1 mm, de préférence est réalisée dans des ordres de grandeur macroscopiques avec h ≤ 0,2 mm, les surfaces de base A_{G} des saillies en forme de pyramides tronquées présentant une surface de ≤ 1,0 mm² et les surfaces de toit A_{D} présentant une surface ≤ 0,8 mm², une ébauche de courroie d'entraînement étant tout d'abord fabriquée en tant qu'assemblage d'une couche de recouvrement, d'un cordon de traction et d'une sous-structure et éventuellement d'une couche de tissu sur un tambour de construction de courroie, puis étant introduite dans un moule de vulcanisation cylindrique de diamètre un peu plus grand, de telle sorte que la sous-structure soit tournée vers le côté intérieur du moule de vulcanisation muni d'un négatif du profil côté entraînement, une manchette/manchette chauffante constituée de caoutchouc étant ensuite insérée dans la cavité intérieure du moule de vulcanisation et de l'ébauche de courroie d'entraînement encore non vulcanisée, et étant dilatée avec apport d'air comprimé et/ou de fluide chauffant de telle sorte qu'elle s'applique à l'intérieur contre l'ébauche de courroie d'entraînement et que cette dernière soit pressée dans le négatif environnant du moule de vulcanisation, la couche extérieure de l'ébauche de courroie d'entraînement, c'est-à-dire la sous-structure ou la couche de tissu, étant par conséquent emboutie dans le négatif et ainsi munie de son profil, **caractérisé en ce que** la manchette est fabriquée au préalable sur un mandrin de préférence métallique, dont le côté extérieur présente le profil de la surface côté arrière de la courroie d'entraînement sous forme d'une pluralité de saillies en forme de pyramides tronquées, le matériau pour la fabrication de la manchette étant enroulé sur le mandrin, de préférence en plusieurs couches d'un élastomère, et ensuite vulcanisé sous pression extérieure sur le mandrin, la manchette obtenant par conséquent sur son côté intérieur le profil de côté arrière de l'arrière de la courroie, et **en ce qu'**après l'achèvement de la vulcanisation de la manchette, cette dernière est finalement retirée du mandrin, puis retournée et insérée de la manière susmentionnée dans la cavité intérieure du moule de vulcanisation et de l'ébauche de courroie d'entraînement encore non vulcanisée.

2. Procédé selon la revendication 1, dans lequel le mandrin est d'abord moleté puis rectifié pour fabriquer le profil se trouvant sur son côté extérieur sous forme d'une pluralité de saillies en forme de pyramides tronquées.

3. Procédé selon la revendication 1 ou 2, dans lequel les saillies en forme de pyramides tronquées sur la surface du mandrin présentent une hauteur h ≤ 0,2 mm, une surface de base A_{G} de 0,8 mm × 0,8 mm et une surface de toit A_{D} de 0,6 mm × 0,6 mm.

4. Procédé selon l'une quelconque des revendications 1 à 3, dans lequel les saillies (2) en forme de pyramides tronquées sont réalisées sous forme de pyramides tronquées droites à quatre côtés avec des surfaces de base A_{G} et des surfaces de toit A_{G} agencées parallèlement.
